# EUROPÄISCHE PATENTSCHRIFT

(11) **EP 1 789 913 B1**
(45) Veröffentlichungstag und Bekanntmachung des Hinweises auf die Patenterteilung: **13.03.2013**
(21) Anmeldenummer: 05771485.9
(22) Anmeldetag: 19.08.2005
(51) Int. Cl.: H01Q 1/27, G06K 19/02, H01Q 1/22, G06K 19/077, G06K 19/04, D03D 15/00, H01Q 1/36

(54) **BANDGEWEBE MIT EINEM EINGEARBEITETEN ANTENNENFADEN FÜR EINEN RF-TRANSPONDER**
TEXTILE STRIP COMPRISING AN INTEGRATED ANTENNA THREAD FOR AN RF TRANSPONDER
RUBAN TISSE A FIL D'ANTENNE INCORPORE POUR UN TRANSPONDEUR RF

(30) Priorität: 14.09.2004 CH 150304
(43) Veröffentlichungstag der Anmeldung: 30.05.2007
(73) Patentinhaber: TEXTILMA AG, 6362 Stansstad (CH)
(72) Erfinder: HILTMANN, Andreas, CH-4310 Rheinfelden (CH); SPEICH, Francisco, CH-5073 Gipf-Oberfrick (CH)
(74) Vertreter: Schmauder, Klaus Dieter
(86) Internationale Anmeldenummer: PCT/CH2005/000484
(87) Internationale Veröffentlichungsnummer: WO 2006/029543

(56) Entgegenhaltungen:
- EP-A- 0 288 676
- WO-A-2005/071605
- WO-A1-01/36728
- US-A- 6 154 138
- PATENT ABSTRACTS OF JAPAN Bd. 015, Nr. 387 (E-1117), 30. September 1991 (1991-09-30) -& JP 03 155088 A (TERADA KEORI KK), 3. Juli 1991 (1991-07-03)

## Beschreibung

### Technisches Gebiet

Die Erfindung betrifft ein Verfahren zum Herstellen eines Bandgewebes mit einem eingearbeiteten Antennenfaden für einen RF-Transponder gemäss Oberbegriff des Anspruches 1, sowie ein solches Bandgewebe.

### Stand der Technik

Ein Bandgewebe der eingangs genannten Art ist beispielsweise aus der WO0136728 bekannt. Dort sind beispielsweise als Antennen dienende Leiterbahnen unter anderem als aufeinander folgende Schüsse eines Grundgewebes eingebracht. Dies hat den Nachteil, dass die einzelnen Schenkel des Leiterfadens eng aneinander liegen und die ständige Gefahr von Kurzschlüssen besteht, sofern die Leiterfäden nicht mit einer aufwändigen Isolation versehen sind.

Aus der US 6 677 917 sind Gewebe wie beispielsweise Kleidungsstücke bekannt, an denen beispielsweise Radiofrequenz-Transponder, sogenannte RF-Transponder befestigt werden können, die eine eingearbeitete Antenne aufweisen. Allerdings ist nicht im Einzelnen beschrieben, wie ein solcher Antennenfaden an einem Gewebe befestigt sein soll.

Aus der EP0288676 ist ein elastisches Bandgewebe mit einem eingearbeiteten Antennenfaden bekannt, auf dem der Antennenfaden meanderförmig auf dem Grundgewebe angeordnet wird.

### Darstellung der Erfindung

Aufgabe der Erfindung ist es, ein Herstellungsverfahren für ein Bandgewebe anzugeben, bei dem im Zuge der Herstellung ein Antennenfaden integriert werden kann, wobei die Gefahr von Kurzschlüssen im Antennenfaden vermieden ist.

Die gestellte Aufgabe wird gelöst durch die kennzeichnenden Merkmale des Anspruches 1.

Durch die Anordnung des Antennenfadens auf einem Grundgewebe, kann der Antennenfaden auf einfache Weise einerseits mit dem Grundgewebe verbunden werden und andererseits meanderförmig oder zick-zack-förmig angebracht werden, sodass die erforderliche Länge des Antennenfadens auf einen relativ kurzen Abschnitt des Bandgewebes verteilt werden kann. Da der Abstand der Schenkel einer Antennenfaden-Schlaufe an mindestens einer Bandkante mindestens zwei Schüsse des Grundgewebes beträgt, ist überdies die Sicherheit gegeben, dass benachbarte Schenkel des Antennenfadens sich nicht berühren, sodass Kurzschlüsse ausgeschlossen sind, die die erforderliche Länge des Antennenfadens ungünstig beeinflussen würden.

Vorteilhafte Ausgestaltungen der Erfindung sind in den Ansprüchen 2 bis 7 beschrieben.

Vorteilhafter ist die Ausgestaltung nach Anspruch 2, wonach der Antennenfaden an der anderen Bandkante mittels mindestens zwei Maschen befestigt ist. Gemäss Anspruch 3 können es mehr als zwei Maschen sein. Besonders vorteilhaft ist es, wenn gemäss Anspruch 4 ein über den Antennenfaden flottierender Kettfaden klebend oder schmelzend ausgebildet und punktuell mit dem Antennenfaden verklebt oder verschmolzen ist.

Gemäss Anspruch 5 ist die Länge des Antennenfadens in bekannter Weise auf den anzuordnenden RF-Transponder abgestimmt.

Besonders vorteilhaft ist die Ausgestaltung nach Anspruch 6, wonach das Bandgewebe als Etikettenband ausgebildet ist, das in der Regel mehrere Etiketten aufweist, wobei jede Etikette einen Antennenfaden vorbestimmter Länge enthält. Die einzelnen Etiketten werden dann vom Etikettenband abgetrennt und bilden Einzeletiketten. Ein jedes solches Etikett kann mit einem entsprechenden RF-Transponder ausgerüstet sein oder werden.

### Kurze Beschreibung der Zeichnungen

Ausführungsbeispiele der Erfindung werden nachfolgend anhand der Zeichnungen näher beschrieben, dabei zeigen:
- Figur 1: ein Bandgewebe mit einem meanderförmig angeordneten Antennenfaden, in Draufsicht;
- Figur 2: das Bandgewebe der Figur 1 im Schnitt II-II;
- Figur 3: das Bandgewebe der Figur 1 im Schnitt III-III;
- Figur 4: ein weiteres Bandgewebe mit einem zick-zack-förmig angeordneten Antennenfaden, in Draufsicht.

### Wege zur Ausführung der Erfindung

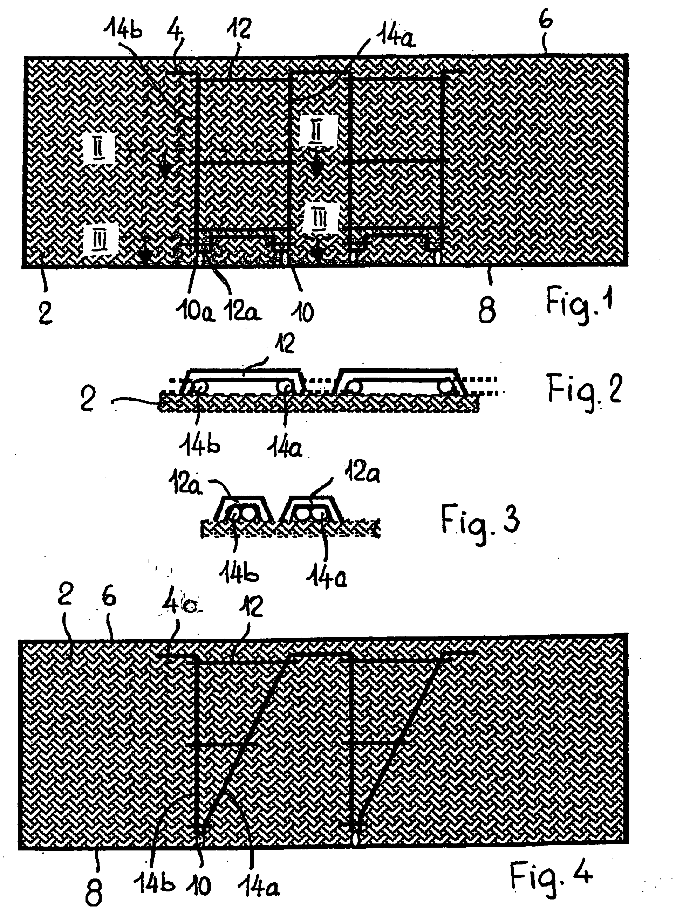

Die Figuren 1 bis 3 zeigen den Ausschnitt eines Bandgewebes, dessen Grundgewebe 2 in üblicher Weise auf einer Nadelwebmaschine hergestellt worden ist. Das Grundgewebe weist nicht näher dargestellte Kettfäden auf, in denen ebenfalls nicht näher dargestellte Schussfadenschlaufen eingebunden sind, die in bekannter Weise von einer Seite mittels einer Schusseintragnadel eingebracht werden und auf der anderen Seite mittels einer Wirknadel abgebunden werden. Dabei können die Schussfadenschlaufen in verschiedener Weise mittels der Wirknadel abgebunden werden, indem entweder die Schussfadenschlaufen mit sich selbst oder mittels eines Hilfsfadens gesichert werden.

Auf diesem Grundgewebe 2 ist ein Antennenfaden 4 meanderförmig angeordnet. Der Antennenfaden 4 ist nach Art einer Schussfadenschlaufe angeordnet, wobei er von einer Bandkante 6 aus eingetragen und auf der anderen Bandkante 8 jeweils mittels einer Masche 10 befestigt ist. Zur Sicherung des Antennenfadens 4 dienen flottierende Kettfäden 12, die jeweils über die Schenkelpaare 14a, 14b einer Antennenfaden-Schlaufe verlaufen, wie insbesondere aus den Figuren 2 und 3 hervorgeht. Die flottierenden Kettfäden sind vorzugsweise klebend oder schmelzend ausgebildet und punktuell mit dem Antennenfaden verklebt oder verschmolzen.

Im Beispiel der Figuren 1 bis 3 verlaufen die Schenkel 14a,14b der Antennenfaden-Schlaufen parallel und der Abstand der Schenkel beträgt an beiden Bandkanten 6,8 mehrere Schüsse des Grundgewebes.

Zur Herstellung eines solchen Bandgewebes mit einem Antennenfaden dienen beispielsweise Nadelwebmaschinen und Schusseintragsnadeln, wie sie beispielsweise in DE 24 00 101 C, EP 0 121 648 A, GB 2 146 665 A, US 5 564 477 A, CH 663 629 A beschrieben sind. Zum Eintragen der Antennenfaden-Schlaufe wird der Webvorgang des Grundgewebes 2 angehalten und ein Hilfswebfach aus den flottierenden Kettfäden 12 und den Kettfäden des Grundgewebes gebildet, in das dann von der Bandkante 6 eine Antennenfaden-Schlaufe eingetragen und mittels eines Hilfsfadens an der gegenüberliegenden Bandkante 8 unter Bildung der Masche 10 abgebunden wird. Dieses Hilfswebfach bleibt dann über so viele Schüsse des Grundgewebes offen, bis der gewünschte Abstand den Schenkeln 14a,14b der Antennenfaden-Schlaufe erreicht ist. Dann erfolgt ein erneutes Anhalten des Webvorganges des Grundgewebes und ein Abbinden der Antennenfaden-Schlaufe mittels einer zweiten Masche 10a, worauf das Hilfswebfach geschlossen wird. Die Antennenfaden-Schlaufe kann auch mit mehr als zwei Maschen 10,10a befestigt werden Über jede Masche 10,10a verläuft ein separater Kettfaden 12a. Für jedes Eintragen einer Antennenfaden-Schlaufe wird der Vorgang wiederholt, bis die gewünschte Länge des Antennenfadens angeordnet ist.

Die Figur 4 zeigt ein weiteres Bandgewebe, das analog dem Bandgewebe der Figuren 1 bis 3 aufgebaut und hergestellt wird, wobei jedoch der Antennenfaden 4a zick-zack-förmig verläuft. Hierzu ist die eingetragene Antennenfaden-Schlaufe an der Bandkante 8 nur mit einer Masche 10 abgebunden. Die Schenkel 14a,14b einer Antennenfaden-Schlaufe haben an einer Bandkante 8 den Abstand eines Schusses und nur an der anderen Bandkante 6 den Abstand mehrerer Schüsse des Grundgewebes.

Das Bandgewebe ist vorzugsweise als bekanntes Etikettenband ausgestaltet, welches aufeinander folgende Etiketten trägt, die mit aufgedruckten und/oder eingewebten Bildern und Zeichen versehen sein können. Ein solches Etikettenband wird ebenfalls in bekannter Weise in einzelne Etiketten unterteilt.

Soiche Etiketten können beispielsweise mit einem RF-Transponder ausgestattet sein, der für 868 MHz ausgelegt ist und einen angepassten Antennenfaden benötigt, der ca. 17 cm lang ist.

### Bezugszeichenliste

- 2: Grundgewebe
- 4: Antennenfaden
- 4a: Antennenfaden
- 6: Bandkante
- 8: Bandkante
- 10: Masche
- 10a: Masche
- 12: flottierender Kettfaden
- 12a: flottierender Kettfaden
- 14a: Schenkel
- 14b: Schenkel

## Patentansprüche

1. Verfahren zum Herstellen eines Bandgewebes mit einem eingearbeiteten Antennenfaden für einen RF-Transponder, wobei ein Grundgewebe auf einer Nadelwebmaschine mit Schusseintragsnadeln hergestellt wird, auf dem der Antennenfaden (4, 4a,4b) gleichzeitig mit der Herstellung des Grundgewebes meanderförmig oder zickzackförmig auf dem Grundgewebe angeordnet wird und wobei der Abstand der Schenkel (14a, 14b) einer Antennenfaden-Schlaufe an mindestens einer Bandkante (6) mindestens zwei Schüsse des Grundgewebes beträgt, und wobei zur Sicherung des Antennenfadens (4) flottierende Kettfäden (12) dienen, die jeweils über die Schenkelpaare (14a, 14b) einer Antennenfaden-Schlaufe verlaufen,
**dadurch gekennzeichnet, dass**
der Webvorgang des Grundgewebes (2) angehalten und ein Hilfswebfach aus den flottierenden Kettfäden (12) und den Kettfäden des Grundgewebes gebildet wird, in das dann von der Bandkante (6) eine Antennenfaden-Schlaufe eingetragen und mittels eines Hilfsfadens an der gegenüberliegenden Bandkante (8) unter Bildung einer Masche (10) abgebunden wird, anschliessend wird der Webvorgang des Grundgewebes (2) für mindestens zwei Grundschüsse mit offenem Hilfswebfach fortgesetzt bis der gewünschte Abstand der Schenkel (14a, 14b) der Antennenfaden-Schlaufe erreicht ist, dann erfolgt ein erneutes Anhalten des Webvorganges des Grundgewebes und ein Abbinden der zweiten Schenkel (14a), worauf das Hilfswebfach geschlossen wird, und dann wird der Webvorgang für das Grundgewebe bis zum Eintragen der nächsten Antennenfaden-Schlaufe fortgesetzt, wobei für jedes Eintragen einer Antennenfaden-Schlaufe der Vorgang wiederholt wird, bis die gewünschte Länge des Antennenfadens angeordnet ist.

2. Verfahren nach Anspruch 1, **dadurch gekennzeichnet, dass** zur Anordnung eines meanderförmingen Antennenfadens, die Antennenfadenschlaufe auf der Abbindeseite (8) mittels einer zweiten Masche (10a) abgebunden wird, worauf das Hilfswebfach geschlossen wird.

3. Verfahren nach einem der Ansprüche 1 oder 2, **dadurch gekennzeichnet, dass** die Antennenfaden-Schlaufe mit mehr als zwei Maschen (10, 10a) befestigt wird.

4. Verfahren nach einem der Ansprüche 1 bis 3, **dadurch gekennzeichnet, dass** die über den Antennenfaden flottierende Kettfäden klebend oder schmelzend ausgebildet und punktuell mit dem Antennenfaden verklebt oder verschmolzen werden.

5. Verfahren nach einem der Ansprüche 1 bis 4, **dadurch gekennzeichnet, dass** die Länge des Antennenfadens (4,4a) auf den anzuordnenden RF-Transponder abgestimmt ist.

6. Verfahren nach einem der Anspruche 1 bis 5, **dadurch gekennzeichnet, dass** das Bandgewebe als Etikettenband mit mehreren Etiketten ausgebildet wird und jeder der Etiketten einen Antennenfaden (4,4a) vorbestimmter Lange enthält.

7. Etikettenband mit einem eingearbeiteten Antennenfaden für einen RF-Transponder, **dadurch gekennzeichnet, dass** es gemäss Anspruch 6 hergestellt ist.

## Claims

1. A method for producing a textile strip comprising an integrated antenna thread for an RF transponder, a basic fabric being produced on a needle loom by means of weft insertion needles, on which basic fabric the antenna thread (4, 4a, 4b) is arranged on the basic fabric in a meander-shaped or zigzag-shaped manner simultaneously with the production of the basic fabric, the spacing of the limbs (14a, 14b) of an antenna thread loop at the location of at least one strip edge (6) amounting to at least two wefts of the basic fabric, wherein securing of the antenna thread (4) is achieved with two floating warp threads (12), each one extending across the limb pairs (14a, 14b) of an antenna thread loop,
**characterized in that**
the operation of weaving the basic fabric (2) is stopped and an auxiliary shed is formed from the floating warp threads (12) and the warp threads of the basic fabric, an antenna thread loop then being inserted into said auxiliary shed from the strip edge (6) and being tied off at the opposite strip edge (8) by means of an auxiliary thread, so as to form a stitch (10), the operation of weaving the basic fabric (2) then being continued for at least two basic wefts with the auxiliary shed being open until the desired spacing of the limbs (14a, 14b) of the antenna thread loop is reached, the operation of weaving the basic fabric then being stopped again and the second limbs (14a) being tied off, the auxiliary shed then being closed and then the operation of weaving the basic fabric being continued until the insertion of the next antenna thread loop, the operation being repeated for each insertion of an antenna thread loop until the desired length of the antenna thread is arranged.

2. The method according to claim 1, **characterized in that** in order to arrange a meander-shaped antenna thread the antenna thread loop is tied off at the tying off side (8) by means of a second stitch (10a), whereupon the auxiliary shed is closed.

3. The method according to one of claims 1 or 2, **characterized in that** the antenna thread loop is fixed by means of more than two stitches (10, 10a).

4. The method according to one of claims 1 to 3, **characterized in that** the warp threads floating over the antenna threads (4, 4a, 4b) are configured to be adhesive or fusible and are adhesively bonded or fused to the antenna thread in a punctiform manner.

5. The method according to one of claims 1 to 4, **characterized in that** the length of the antenna thread (4, 4a) is adapted to the RF transponder to be arranged.

6. The method according to one of claims 1 to 5, **characterized in that** the textile strip is configured as a label strip with a plurality of labels, each of the labels containing an antenna thread (4, 4a) with a predetermined length.

7. A label strip comprising an integrated antenna thread for an RF transponder, **characterized in that** it is produced according to claim 6.

## Revendications

1. Procédé d'obtention d'un ruban tissé dans lequel est incorporé un fil d'antenne pour un transpondeur RF, selon lequel on fabrique un tissu de base sur un métier à tisser à aiguilles équipé d'aiguilles d'insertion de la trame, le fil d'antenne (4, 4a, 4b) étant disposé en formant des méandres ou des zigzags sur le tissu de base simultanément à la fabrication de ce tissu de base, la distance entre les côtés (14a, 14b) d'une boucle de fil d'antenne au niveau d'au moins un bord (6) du ruban étant égale à au moins deux trames du tissu de base, et pour la sécurisation du fil d'antenne (4) des fils de chaine flottés (12) s'étendant respectivement sur les paires de côtés (14a, 14b) d'une boucle de fil d'antenne,
**caractérisé en ce que**
le processus de tissage du tissu de base (2) est arrêté et un pas de chaine auxiliaire est formé à partir des fils de chaine flottés (12) et des fils de chaine du tissu de base, pas de chaine auxiliaire dans lesquels ensuite, à partir du bord du ruban (6) une boucle de fil d'antenne est insérée et est liée au moyen d'un fil auxiliaire au niveau du bord opposé (8) du ruban en formant une maille (10), puis, le processus de tissage du tissu de base (2) est poursuivi pour au moins deux trames de base, le pas de chaine auxiliaire étant ouvert jusqu'à ce que la distance souhaitée entre les côtés (14a, 14b) de la boucle de fil d'antenne soit atteinte, puis, un nouvel arrêt du processus de tissage du tissu de base et une liaison du deuxième côté (14a) sont effectués, le pas de chaine auxiliaire étant fermé, puis, le processus de tissage du tissu de base est poursuivi jusqu'à insertion de la boucle de fil d'antenne suivante, pour chacune des insertions d'une boucle de fil d'antenne, le processus étant répété jusqu'à ce que la longueur souhaitée du fil d'antenne ait été atteinte.

2. Procédé conforme à la revendication 1,
**caractérisé en ce que**
pour l'obtention d'un fil d'antenne formant des méandres, la boucle de fil d'antenne est liée sur le côté de liaison (8) au moyen d'une seconde maille (10a), le pas de chaine auxiliaire étant fermé.

3. Procédé conforme à l'une des revendications 1 et 2,
**caractérisé en ce que**
la boucle de fil d'antenne est fixée avec plus de deux mailles (10, 10a).

4. Procédé conforme à l'une des revendications 1 à 3,
**caractérisé en ce que**
les fils de chaine flottés sur le fil d'antenne sont adhésifs ou fusibles et sont collés ou soudés ponctuellement sur le fil d'antenne.

5. Procédé conforme à l'une des revendications 1 à 4,
**caractérisé en ce que**
la longueur du fil d'antenne (4, 4a) est en accord avec le transpondeur RF associé.

6. Procédé conforme à l'une des revendications 1 à 5,
**caractérisé en ce que**
le ruban tissé est réalisé sous la forme d'un ruban à étiquettes comportant plusieurs étiquettes et chacune de ces étiquettes renferme un fil d'antenne (4, 4a) de longueur prédéterminée.

7. Ruban à étiquettes dans lequel est incorporé un fil d'antenne pour un transpondeur RF,
**caractérisé en ce qu'**
il est obtenu par la mise en oeuvre du procédé conforme à la revendication 6.
